# EUROPÄISCHE PATENTSCHRIFT

(11) **EP 3 420 227 B1**
(45) Veröffentlichungstag und Bekanntmachung des Hinweises auf die Patenterteilung: **19.02.2020**
(21) Anmeldenummer: 17709905.8
(22) Anmeldetag: 20.02.2017
(51) Int. Cl.: F03D 80/00, F16C 11/06

(54) **WINDKRAFTANLAGEN MIT ELASTISCHEN KUGEL-PENDELLAGERN**
WIND POWER PLANTS HAVING ELASTIC SELF-ALIGNING BALL BEARINGS
ÉOLIENNES POURVUES DE PALIERS À ROTULE ÉLASTIQUES

(30) Priorität: 24.02.2016 EP 16000441
(43) Veröffentlichungstag der Anmeldung: 02.01.2019
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2017/000237
(87) Internationale Veröffentlichungsnummer: WO 2017/144167

(56) Entgegenhaltungen:
- EP-A2- 1 008 747
- WO-A1-2016/023628
- DE-B- 1 105 738

## Beschreibung

Die Erfindung betrifft Windkraftanlagen, welche neben den üblichen Vorrichtungen zur Dämpfung von in der Anlage auftretenden unterschiedlichen Schwingungen mit neuartigen elastischen Kugel-Pendellagern ausgestattet sind. Diese Kugelpendellager können prinzipiell zur kardanischen Aufhängung eines Pendeltilgers vorzugsweise im Turm einer Windkraftanlage als auch zur Seilbefestigung von schwimmenden Off-Shore-Anlagen am Grund eines Gewässers Verwendung finden. Die Erfindung betrifft auch die entsprechenden Schwingungs-Pendeltilger als solche, welche zusätzliche Dämpfungseinrichtungen zur Verminderung oder Reduzierung von Torsionsschwingungen des Pendels aufweisen, welche beim Schwingen des Pendels beispielsweise in der Windkraftanlageauftreten auftreten können, insbesondere dann, wenn das Pendel anschlägt.

Die Aufhängung von Pendeltilgern in Windkraftanlagen erfolgt nach dem Stand der Technik (siehe z.B. EP 1008747 A2) zumeist durch den Einsatz von Schäkeln, die selbst außer den Reibungskräften keinen Beitrag zur Dämpfung der Pendelbewegung liefern. Derartige Schäkel, die in ihrer einfachsten Ausführungsform U-förmige, mit einem Schraub- oder Steckbolzen verschließbare Bügel sind, unterliegen jedoch einem starken Verschleiß, so dass sie einer ständigen Überwachung unterzogen werden müssen, da die Gefahr des Abfallens des Pendelseils zusammen mit der Tilgermasse mit zunehmender Betriebszeit gegeben ist. Alternativ zu der genannten einfachen Aufhängung kommen im Stand der Technik auch zuweilen Kardangelenke zum Einsatz, welche jedoch den Nachteil haben, das sie relativ aufwendig und kostspielig sind auch wegen ihres erhöhten Verschleißes im Bereich der verwendeten Gleit- oder Wälzlager.

Vereinzelt werden im Stand der Technik auch elastische Pendelgelenke vorgeschlagen, welche in ihren bekannten Konstruktionsvorschlägen jedoch eine für den Einsatz in Windkraftanlagen prinzipiell unerwünschte große Steifigkeit in das Schwingungssystem einbringen, so dass durch die bekannte relativ starke Temperaturabhängigkeit der elastischen Materialen die Eigenfrequenz des Tilgersystems in Abhängigkeit von der Temperatur in nicht vorhersehbarer Weise beeinflusst und verändert wird. Dies wiederum erfordert vermehrt eine aufwendige Anpassung des Schwingungssystems.

Es bestand somit die Aufgabe einen Pendeltilger insbesondere für den Einsatz in Windkraftanlagen mit einer Aufhängung bzw. einem Gelenklager bereitzustellen, welcher in der genannten Hinsicht verbesserte Eigenschaften gegenüber den bekannten Lösungen des Standes der Technik aufweist., wobei insbesondere Wert gelegt werden sollte auf eine hohe axiale Festigkeit, ein geringes Rückstellmoment, und einen möglichst unbedeutenden Einfluss auf die System-Eigenfrequenz und damit auf weitgehende Temperaturunabhängigkeit.

Die gestellte Aufgabe wurde durch die im Folgenden und in den Ansprüchen spezifizierten und beschriebenen Erfindungsgegenstände gelöst.

Gegenstand der Erfindung ist somit eine Windkraftanlage umfassend mindestens ein elastisches Lager, welches ein Kugelpendellager ist, das wiederum ein Kugelgelenk (5) mit einem inneren Gelenkkopf (5.4) und einer Gelenkpfanne (5.5) umfasst, wobei der Gelenkkopf mindestens Halbkugelform aufweist und in der entsprechenden dimensionierten und geformten Gelenkpfanne gelagert ist, und zwischen Gelenkkopf und Gelenkpfanne mindestens eine, vorzugsweise zwei oder drei Elastomerschichten (5.1) in der Weise angeordnet sind, dass mindestens 80%, vorzugsweise 90 - 100% der Fläche der Elastomerschicht mit den sphärischen Flächen des Gelenkkopfes und der Gelenkpfanne festverbunden ist, und die Elastomerschicht eine Dicke von 5 mm - 20 mm aufweist, wobei bei Vorliegen mehrerer Elastomerschichten, diese vollständig oder teilweise durch Zwischenbleche (5.3) voneinander getrennt sind.

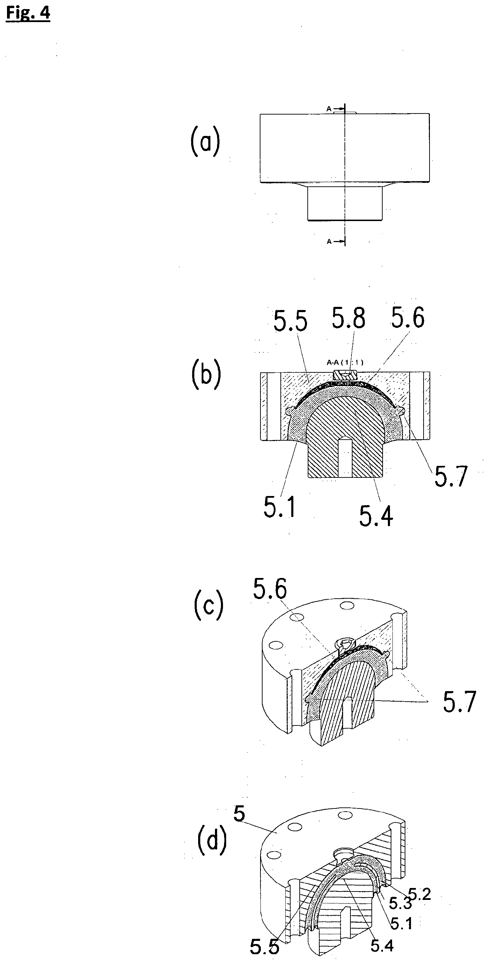

In einer bevorzugten Ausführungsform der Erfindung weist das genannte Kugel-Pendelgelenk bzw. -Lager zwei Elastomerschichten auf, die durch ein Blech voneinander getrennt sind, welches vorzugsweise im mittleren Bereich der Elastomerschicht unterbrochen ist (Fig. 4d)

Es hat sich gezeigt, dass vorteilhafterweise solche Gelenkköpfe und entsprechende Gelenkpfannen eingesetzt werden sollten, welche mindestens eine Halbkugelform aufweisen, vorzugsweise jedoch eine Teilkugelform mit einem Kreisradius bzw. Umschlingungswinkel von 180° bis 325°, vorzugsweise 180° bis 245°, bzw. 220° bis 245°, wobei möglichst die gesamten sphärische Flächen von einer Elastomerschicht bedeckt sind. Nur unter dieser konstruktiven Maßnahme gelingt es, dass der Pendeltilger auf kleinem Raum große Winkel unter Aufnahme von großen Kräften durchlaufen kann, ohne das die Eigenfrequenz des Systems, bzw. der Windkraftanlage, nennenswert beeinflusst wird.

In einer besonderen Ausführungsform der Erfindung kann die Elastomerschicht (5.1) zwischen dem sphärischen Gelenkkopf (5.4) und der sphärischen Gelenkpfanne (5.5) unterschiedlich steif sein, insbesondere in Bezug auf die axiale und hierzu senkrechte horizontale Ausrichtung des Pendels, oder anders ausgedrückt, in Bezug auf die Mitte der jeweiligen Sphäre im Vergleich zu den Rändern. Die kann erfindungsgemäß durch zwei Maßnahmen erreicht werden. Zum einen kann das Elastomermaterial an der betreffenden Stelle, bzw. der betreffenden Bereiche von unterschiedlicher Steifigkeit sein, so dass die Auslenkeigenschaften des Pendels dadurch beeinflusst werden können, ohne dass sich dabei nennenswert die Dämpfungseigenschaften des Pendeltilgers ändern. Unterschiedliche Steifigkeiten können z.B. durch Einsatz von Elastomermaterial mit unterschiedliche Shorehärte erzielt werden.

Zum anderen kann vorgesehen werden, dass das Elastomermaterial speziell platzierte (z.B. am Scheitelpunkt der Gelenkkopf-Sphäre) Kammern enthält, welche über ein Ventil von außen mit einem Fluid unter Druck gefüllt werden können (Fig. 4b, c). Das Fluid dient dazu, dass ein Hohlraum entsteht und das Element dadurch in kardanischer Richtung weicher wird. Das Schub belastete Element wird durch höheren Druck nicht steifer.

Die Kammern können auch prinzipiell durch das Einpressen von Fluid in einem Bereich entstehen, bei dem Elastomerschicht und Metall des Gelenklagers nicht fest miteinander verbunden sind, oder in mit einem Bereich innerhalb der Elastomerschicht, in dem Elastomermaterial nur aufeinander liegt und unter Druck zu einer Kammer gedehnt werden kann.

Gegenstand der Erfindung ist ferner eine entsprechende Windkraftanlage bei der das Kugelpendellager Teil eines Pendel-Schwingungstilgers ist, welcher eine Pendelstange (2) und eine Tilgermasse (1) umfasst, wobei sich der Pendeltilger in alle Richtungen frei um das elastische Kugelpendellager bewegen kann, und vorzugsweise eine Vorrichtung im Bereich des Kugelpendellagers aufweist, welche Torsionsschwingungen des Tilgers vermindert oder verhindert.

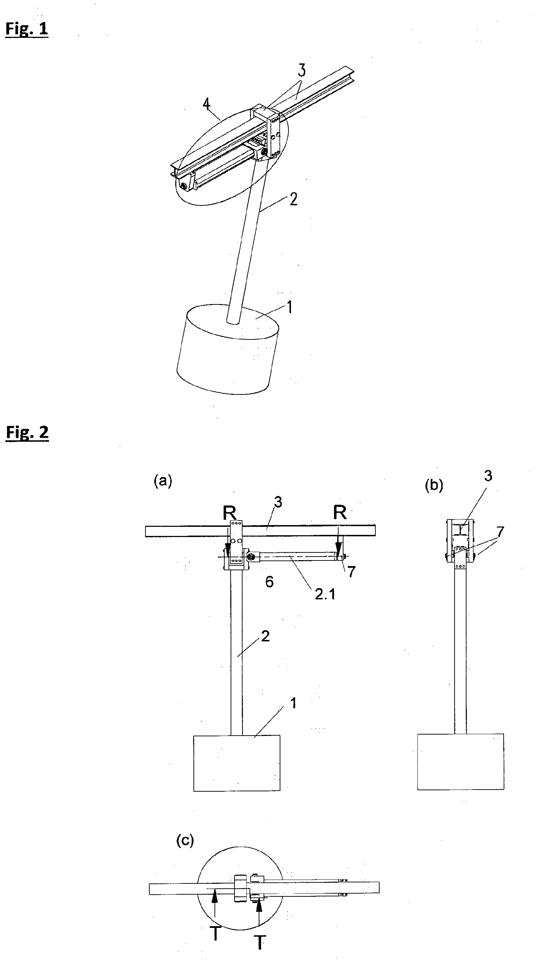

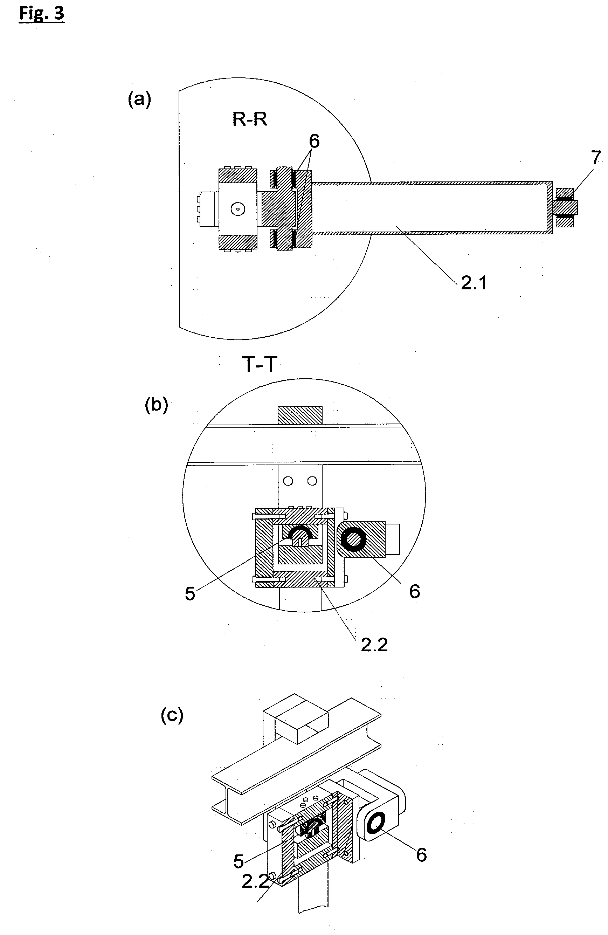

In einer ersten derartigen Ausführungsform (Fig. 1 - 3) umfasst die besagte Vorrichtung mindestens einen Torsionshebel (2.1), welcher im Wesentlichen senkrecht zur Pendelstange (2) angebracht ist und ein elastisches Torsionslager für Nickbewegungen (6) und ein elastisches Torsionslager für Drehbewegungen (7) des Pendels (1, 2) aufweist. Zur besseren Lastverteilung können auch mehrere derartige Torsionshebel, vorzugsweise drei, vorgesehen werden.

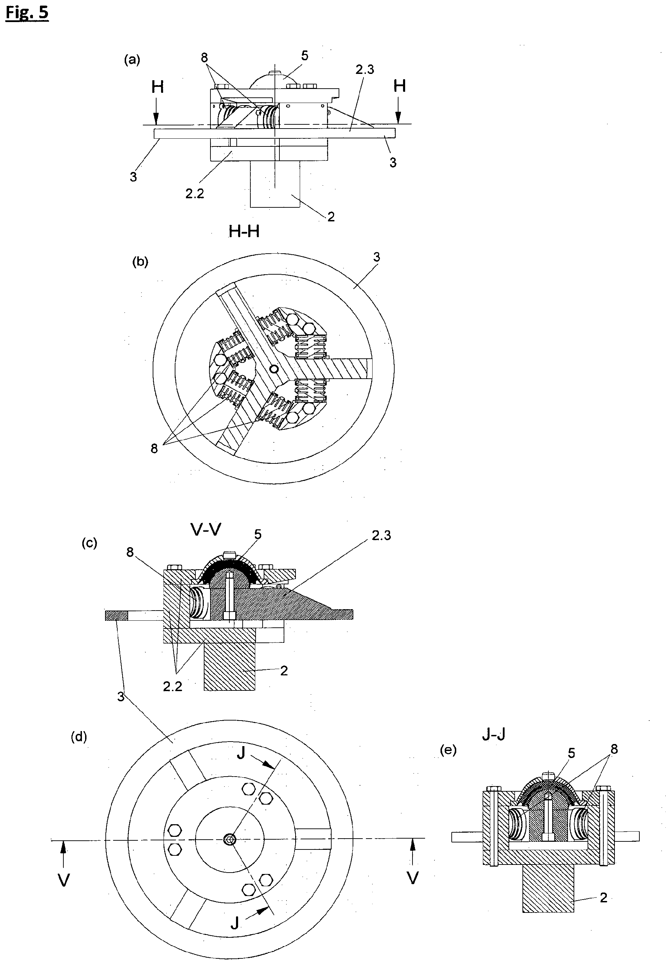

In einer weiteren Ausführungsform der Erfindung umfasst die Vorrichtung mindestens drei Federelemente (8), welche im Bereich des Pendelgelenks (5) im Wesentlichen gleichmäßig um die Pendelstange (2) herum verteilt und so angeordnet sind, dass torsionale Bewegungen des Pendels (2) gedämpft oder vermieden werden können (Fig. 5). Die Federelemente können dabei übliche Spiralfedern sein oder elastische Federn aus Schichten von Elastomermaterial und Zwischenblechen. Ferner sind auch hydraulische Dämpfer verwendbar. Vorzugsweise werden drei solche Elemente mit Federrichtung senkrecht zur Achse des Pendeltigers im Bereich des Pendelgelenks, vorzugsweise um dieses herum, oder oberhalb oder unterhalb davon angeordnet, vorzugsweise so, dass sie einen 120° Winkel zueinander bilden. Auf diese Weise können durch die wirkenden Federkräfte Verdrehungen des Pendeltilgers durch Anschlagen desselben an die Turmwand oder an eine hierfür vorgesehene Anschlagvorrichtung verhindert oder reduziert werden.

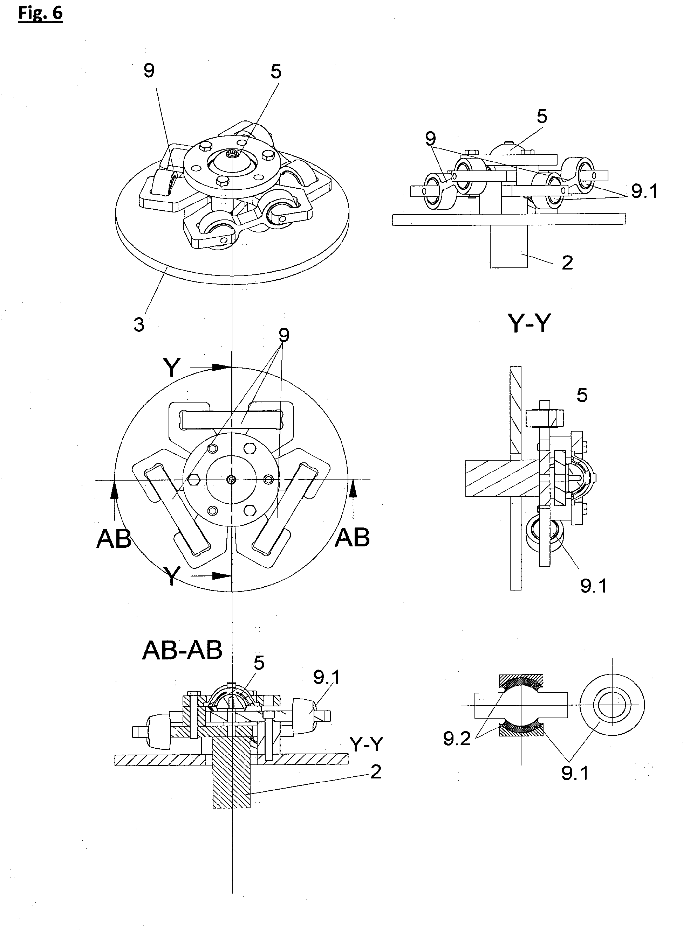

Die im Wesentlichen gleiche Wirkung wird durch die erfindungsgemäße ähnlich angeordnete weitere Ausführungsform der Fig. 6 erreicht. Hierbei wird eine diesbezügliche Vorrichtung eingesetzt, die mindestens drei Lenker (9) mit elastischen sphärischen Lagern (9.1)(9.2) aufweist, welche im Bereich des Pendelgelenks (5) im Wesentlichen gleichmäßig um die Pendelstange (2) herum verteilt und so angeordnet sind, dass torsionale Bewegungen des Pendels (2) gedämpft oder vermieden werden. Die Lenker (9) können beispielsweise, wie in Fig. 6 dargestellt, durch Rollenelemente realisiert werden.

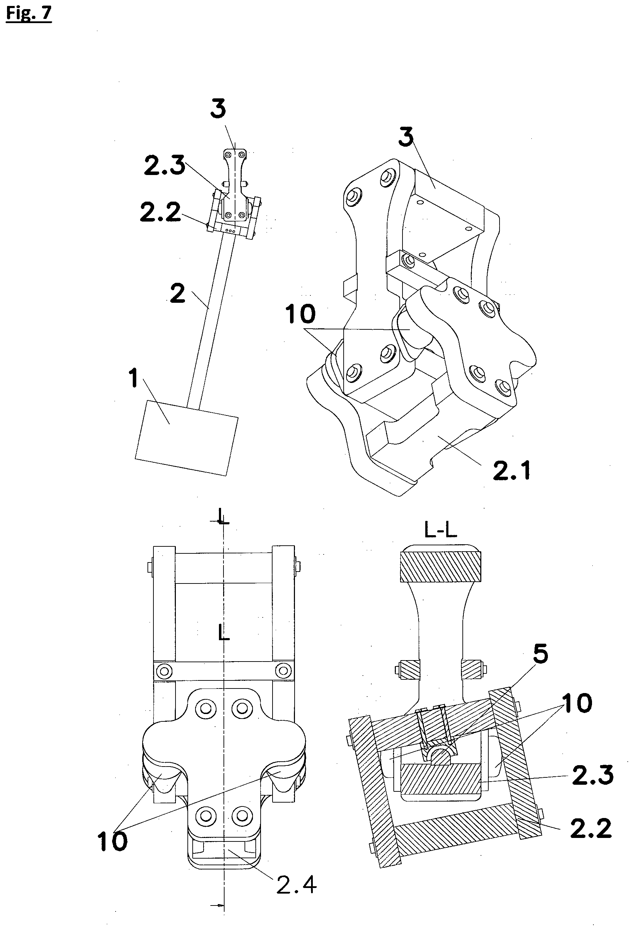

In einer ganz speziellen einfachen Ausführungsform der Erfindung umfasst die Vorrichtung zur Dämpfung von Torsionsbewegungen des Pendels ein Pendeljoch (2.2)(2.3) mit elastischen Anschlagelementen (10) im Bereich des Pendelgelenks (5) aufweist, wie beispielsweise in Fig. 7 dargestellt.

In weiteren Ausführungsformen der Erfindung können die genannten Vorrichtungen zur Dämpfung der torsionalen Bewegung des Pendels durch Kombinationen der genannten Ausführungen gebildet werden. Insbesondere kann die Verwendung eines Pendeljochs mit einer Federeinrichtung oder einer Lenkereinrichtung kombiniert werden.

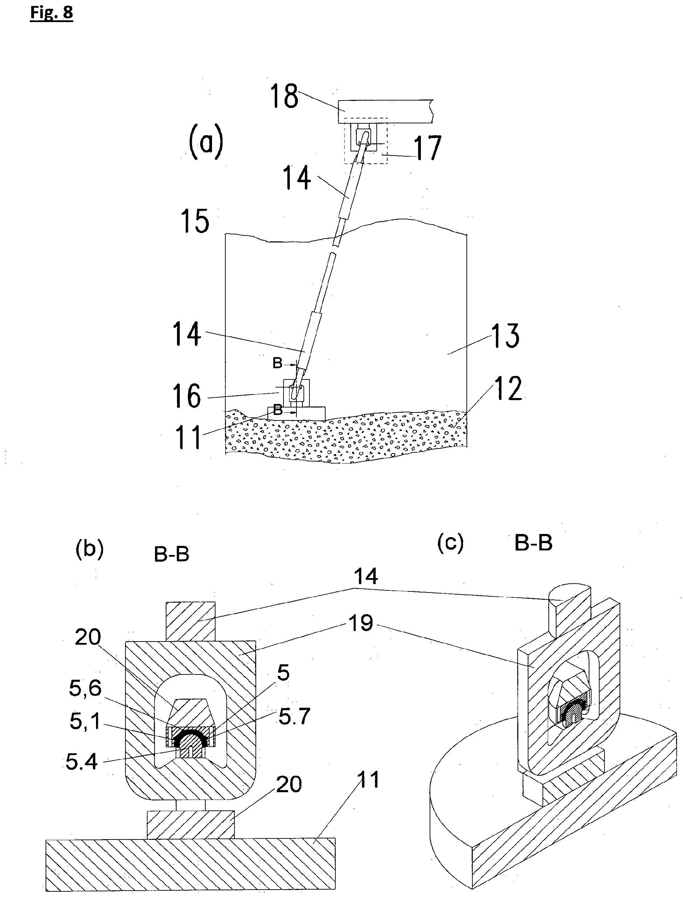

Die beschriebenen erfindungsgemäßen Pendelgelenke eigenen sich auch vorzüglich für den Einsatz in Off-Schore-Plattformen unterschiedlicher Nutzung, beispielsweise Windkraftanlagen oder Ölförderungsanlagen zur beweglichen Befestigung der Plattform mit dem Meeresgrund. Gegenstand der Erfindung ist somit auch eine Off-Shore Plattform (18), insbesondere für Windkraftanlagen, welche über Seile (15) mit dem Meeres- oder Seegrund (12) über Fundamente (11) verankert ist, wobei jedes Seil (15) mittels Seilbefestigungen (14) über ein besagtes erfindungsgemäßes oberes Kugelgelenk (17) an der Plattform und ein besagtes unteres erfindungsgemäße Kugelgelenk (16) am Fundament befestigt ist. Eine solche Anwendung ist in Fig. 8 dargestellt.

Die Erfindung betrifft auch einen entsprechenden Pendel-Schwingungstilger, umfassend eine Pendelstange (2) oder ein Pendelseil, mindestens eine Tilgermasse (1) und ein elastisches Kugelgelenk (5) am oberen Ende der Pendelstange/Pendelseil, wobei
(i) das Kugelgelenk (5) mit einem inneren Gelenkkopf (5.4) und einer Gelenkpfanne (5.5) ausgestattet ist,
(ii) der Gelenkkopf mindestens Halbkugelform aufweist und in der entsprechenden dimensionierten und geformten Gelenkpfanne gelagert ist,
(iii) zwischen Gelenkkopf und Gelenkpfanne mindesten eine, vorzugsweise zwei durch eine Blechgetrennte Elastomerschichten (5.1) angeordnet ist/sind, so dass sich das Pendel in alle Richtungen frei um das elastische Kugelpendellager bewegen kann ,
(iv) der mit der Elastomerschicht verbundene Gelenkkopf (5.4) und die entsprechende Gelenkpfanne (5.5) eine Teilkugelform mit einem Kreisradius oder Umschlingungswinkel von 180° bis 325°, vorzugsweise größer als 220°, insbesondere größer als 245°, aber nicht größer als 325° aufweist, und
(v) im Bereich des Kugelgelenks (5) eine Vorrichtung angebracht ist, welche axiale Torsionsschwingungen des Pendels vermindert oder verhindert, wobei die Vorrichtung zusätzlich
   (i) mindestens einen Torsionshebel (2.1) umfasst, welcher im Wesentlichen senkrecht zur Pendelstange (2) angebracht ist und ein elastisches Torsionslager für Nickbewegungen (6) und ein elastisches Torsionslager für axiale Drehbewegungen (7) des Pendels (1, 2) aufweist, oder
   (ii) mindestens drei Federelemente (8) aufweist, welche im Bereich des Pendelgelenks (5) im Wesentlichen gleichmäßig um die Pendelstange (2) herum verteilt und so angeordnet sind, dass torsionale Bewegungen des Pendels (2) gedämpft oder vermieden werden, oder
   (iii) mindestens drei Lenker (9) mit elastischen sphärischen Lagern (9.1, 9.2) aufweist, welche im Bereich des Pendelgelenks (5) im Wesentlichen gleichmäßig um die Pendelstange (2) herum verteilt und so angeordnet sind, dass torsionale Bewegungen des Pendels (2) gedämpft oder vermieden werden, oder
   (iv) ein Pendeljoch (2.2)(2.3) mit elastischen Anschlagelementen (10) im Bereich des Pendelgelenks (5) aufweist und so angeordnet ist, dass torsionale Pendelbewegungen gedämpft oder vermieden werden, oder
   (v) Kombinationen der Vorrichtungselemente aus (ii) bis (iv), insbesondere (ii) und (iv), oder (iii) und (iv) umfasst.

Letztlich betrifft die Erfindung auch solche Windkraftanlagen und Pendel-Schwingungstilger, die außer den beschriebenen Torsionsdämpfungselementen zusätzlich Dämpfungselemente aufweisen, welche die in der Anlage auftretende unterschiedlichen Schwingungen zu dämpfen vermögen. Dies können im Stand der Technik bekannte Wirbelstromdämpfer, Hydraulikdämpfer oder andere temperaturunabhängige Dämpfer sein (z.B. WO 2013/023728, WO 2014/102016, WO 2016/023628) .

Im Folgenden werden die in den Abbildungen, im Text und in den Ansprüchen verwendeten Bezugsgrößen kurz beschrieben:
- 1: Tilgermasse
- 2: Pendelstange
- 2.1: Torsions-Hebel
- 2.2: Pendeljoch
- 2.3: obere Befestigung
- 2.4: Pendelstangen Anschluss
- 3: Befestigungskonstruktion
- 4: Pendelelement mit Drehhemmung
- 5: Halb-Kugel-Gelenk
- 5.1: innere Elastomerschicht
- 5.2: äußere Elastomerschicht
- 5.3: Zwischenblech
- 5.4: innere Kugel
- 5.5: Äußere Kugel
- 5.6: Fluid
- 5.7: Dichtwulst
- 5.8: Füllventil
- 6: Nick- Torsionslager
- 7: Dreh Torsionslager
- 8: Torsions- Federelemente
- 9: Lenker
- 9.1: Sphärolager in Lenker
- 9.1.1: kugelförmige Elastomerspur
- 10: Anschlagpuffer
- 11: Fundament Anker
- 12: Meeresgrund
- 13: Wasser
- 14: Seilbefestigung
- 15: Seil
- 16: Gelenk unten
- 17: Gelenk oben
- 18: Off-Shore Plattform
- 19: bewegliches Joch
- 20: eingespanntes Joch

Im Folgenden werden weitere Details der Erfindung insbesondere anhand der Abbildungen 1 - 10 beschrieben:
Das beschriebene Tilger-System hat bei hoher axialer Festigkeit ein geringes Rückstellmoment, so dass der Einfluss des Elastomers auf die Eigenfrequenz nur einen sehr unbedeutenden Einfluss auf die Eigenfrequenz des Systems hat und damit auch die Temperaturabhängigkeit vernachlässigbar klein wird.

Diese Eigenschaft wird durch eine oder mehrere übereinandergestapelte halbkugelförmige Elastomerschichten erreicht. Hiermit werden aufgrund der großen Kugel-Mantelfläche und der besonders dünnen Schichten hohe axiale Steifigkeiten erreicht, was die Übertragung entsprechend großer Axialkräfte ermöglicht.

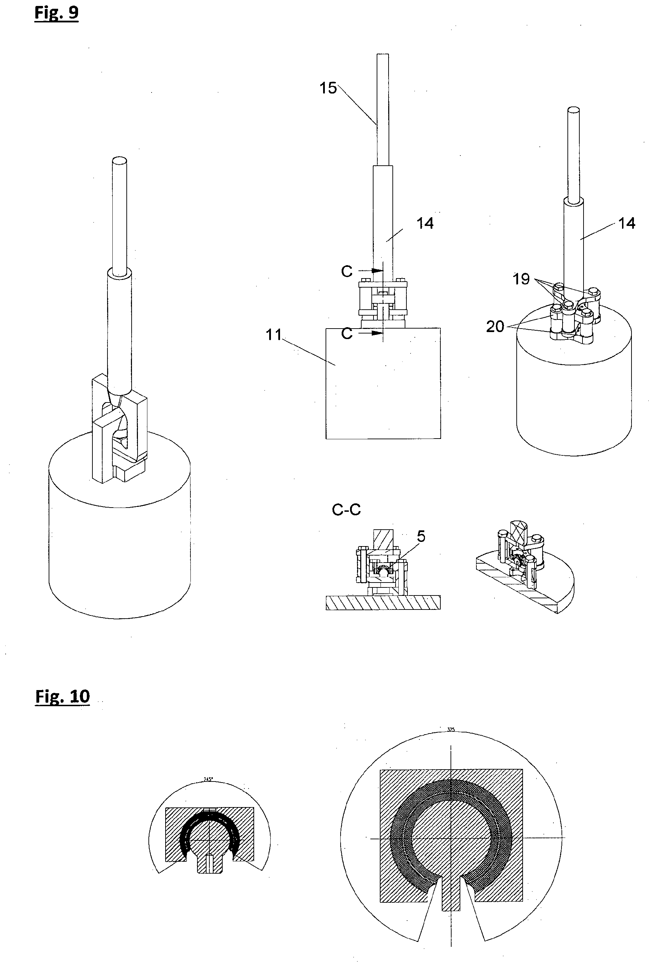

Das Verhältnis der axialen Steifigkeit zur Torsionssteifigkeit vergrößert sich mit zunehmendem Umschlingungswinkel, weshalb sich Umschlingungswinkel der Kugelelemente größer 220°, insbesondere zwischen 220° und 325°, bzw. 220° und 245° besonders eignen. Eine solche Ausführungsform ist in Fig. 10 dargestellt. Kugelelemente mit einem Winkel bis etwa 225° können noch als einziges Teil hergestellt werden. Bei größeren Umschlingungswinkeln sind sie in der Regel aus zwei oder mehr Teilen zusammenzusetzen. Die Elastomer Schicht wird möglichst weit um den Kugelradius herumgezogen, um das Verhältnis freie Gummioberfläche zu der am Metall angebundenen Gummioberfläche möglichst klein zu halten. Je nach Anforderungen an den möglichen Drehwinkel können beliebig viele Elastomerschichten hintereinander geschaltet werden.

Die kardanische Steifigkeit des Tilgers kann durch Einbringen eines Fluides (5.6) weiter reduziert werden, da im Bereich des Fluides keine Elastomerverformung erfolgt. Die Elastomerverformung erfolgt lediglich im Bereich außerhalb des Fluides, so dass nur ein kleinerer Elastomerbereich verformt wird, was geringere Schubkräfte und damit geringere kardanische Kräfte erwirkt. Wie in Fig. 4b dargestellt, verhindert ein Dichtwulst (5.7), das Eindringen der Fluides in den Raum zwischen Metall und Elastomer. Wie allgemein bekannt, neigt Flüssigkeit dazu, sich in Form von kleinsten Tropfen bei Entlastung in die Gummimetallbindung einzulagern und sich bei der nächsten Belastung tiefer in die Bindung eingraben, so dass bei häufigem Belasten die Flüssigkeit austreten kann. Dies kann beispielsweise dadurch verhindert werden, dass anstatt Wasser eine zähflüssige Flüssigkeit zum Beispiel dickflüssiges Silikon eingesetzt wird.

Ein üblicher Pendeltilger hat gewöhnlich eine Tilgermasse, welche über ein Anschlagsystem an die Wandung des Turmes der Windkraftanlage anstößt. Dabei kann es passieren, dass der Tilger tangential an die Rundung anschlägt und somit ein verhältnismäßig großes Torsionsmoment erfährt. Dieses Torsionsmoments wird über die Pendelstange auf das Kugelgelenk übertragen. Das Kugelgelenk hat jedoch nur eine geringe torsionale Steifigkeit, so dass es erforderlich ist, dieses mit einer weiteren Konstruktion aufzunehmen. Dabei darf der Verdrehungswinkel des Tilgers nicht groß sein, um die Anbindung an die Dämpfer nicht zu belasten. Die erfindungsgemäße Lösung ist in Fig. 1 bis 3 dargestellt.

Fig. 1 zeigt ein Pendeltilger bestehend aus der Tilgermasse (1), der Pendelstange (2), einer Befestigungskonstruktion (3) und dem Pendelelement mit Drehhemmung (4). Das Moment wird über den Torsionshebel (2.1) übertragen. Dabei ist der Torsionshebel gelenkig an das Pendeljoch (2.2) angebunden. Der Drehpunkt dieser Anbindung liegt vorteilhafterweise in der gleichen Höhe wie der Drehpunkt des Kugel-Pendellagers. Diese Anbindung kann z.B. in Form von Gleitlagern hergestellt werden. Vorzugsweise werden hier Elastomerbuchsen (6) verwendet. Das Ende des Torsionshebels mündet in ein Drehtorsionslager (7), welches senkrecht zu den Nick- Torsionslagern (6) angeordnet ist. Dieses Lager ist als Elastomerlager ausgeführt, damit es sowohl eine Torsionsbelastung als auch eine kardanische Belastung übertragen kann. Es ist möglich, das System, wie dargestellt, mit einem Torsionshebel (2.1), auszuführen. Um eine bessere Lastverteilung zu ermöglichen, können auch zwei oder mehrere, vorzugsweise drei solcher Hebel, am Umfang ausgeführt werden.

Alternativ zu einem oder mehreren Torsionshebeln, wie beschrieben, ist es auch möglich Federelemente oder elastische Elemente einzusetzen, wie in Fig. 5 und Fig. 6 gezeigt. Das Halb-Kugelgelenk (5) von Fig. 5 ist dabei aufgebaut, wie oben beschrieben. Zur Aufnahme der torsionalen Stöße sind mehrere tangential angeordnete mehrschichtige Torsion-Federelemente (8) im Bereich des Gelenkes angebracht. Diese verbinden das Pendeljoch (2.2) mit der oberen Befestigung (2.3). Detonation-Federelemente (8) stellen somit eine elastische Verbindung den Elementen (2.2) und (2.3) her. Diese Verbindung ist in Pendelrichtung aufgrund der geringen Schubsteifigkeit solcher mehrschichtige Elemente weich. Auf Grund der relativ hohen axialen Steifigkeit der mehrschichtigen Torsion-Federelemente besteht eine hohe Steifigkeit in Torsionsrichtung zwischen (2.2) und (2.3). Das System von Fig. 6 ist ähnlich aufgebaut wie die Ausführungsform gemäß Fig. 5. Jedoch ist die obere Befestigung (2.3) mit dem Pendeljoch (2.2) durch Lenker (9) verbunden. Daraus ergibt sich ebenfalls eine torsional steife und kardanisch weiche Verbindung zwischen Pendeljoch (2.2) und der oberen Befestigung (2.3). Die Lenker (9) bestehen beispielsweise aus zwei Elastomer-Sphärolagern (9.1) oder Rollenelementen, welche im Stand der Technik als solche bekannt sind. Diese haben die Eigenschaft, dass sie radial steif und in kardanischer Richtung relativ weich sind.

Die Ausführungsform gemäß Fig. 7 besteht im Wesentlichen aus dem Halbkugel-Gelenk (5), dem Pendeljoch (2.2) mit der oberen Befestigung (2.3) Die auftretenden Torsionskräfte bedingt durch das tangentiale Anschlagen des Tilgers werden über Anschlagpuffer (10) übertragen.

Ein ganz anderer Anwendungsfall für die elastischen Kugel-Pendellager ist die Anbindung und Befestigung von Off-Shore Plattformen insbesondere in Zusammenhang mit Windkraftanlagen oder ggf. anderen schwimmenden Anlagen (Fig. 8, Fig. 9). Das Lager kann also sowohl für Off-Shore Plattformen als solche, als für Off-Shore Plattformen mit Windkraftanlagen im Besonderen eingesetzt werden. Beim Befestigen der Seile von Off-Shore Gründungen besteht das Problem, dass die Seile aufgrund der kardanischen Bewegung an der Einspannstelle knicken. Abhilfe kann durch den Einsatz von handelsüblichen Schäkeln erfolgen. Diese unterliegen jedoch aufgrund der entstehenden Reibung zwischen den einzelnen Gliedern einem erheblichen Verschleiß, so dass diese nur für einen begrenzten Zeitraum einsatzfähig sind. Beim Einsatz des erfindungsgemäßen Elastomer-Kugel-Pendellager erfolgt der Übergang reibungsfrei. Die Elemente sind über einen langen Zeitraum wartungsfrei. Verwendet wird auch hier ein Elastomer-Kugel-Pendellager (5) mit einer oder mehreren halb kugelförmigen Elastomerschichten. Diese werden zwischen dem beweglichen Joch (19) und dem fest eingespannten Joch (20) platziert. An dem jeweils beweglichen Joch (20) ist die Seilbefestigung (14) (Fig. 9) angebracht. Das Seil ist aufgrund der geringen kardanischen Steifigkeit der Elastomerelemente nur geringen Biegemomenten ausgesetzt. Die Knickbelastung auf das Seil ist gering. Derartige Elemente gemäß der Erfindung können bereits im Durchmesser von ca. 200 mm Lasten von mehr als 1000 kN bei gleichzeitig geringer kardanischer Steifigkeit übertragen. Dabei kann die kardanische Steifigkeit weiter durch den Einsatz eines Fluides (56) gemäß einer Anordnung nach Fig. 4b,c reduziert werden. Bei Einsatz von zwei Elastomerschichten kann auch an der Innenkugel ein Fluidpolster eingebaut werden, so dass die kardanische Steifigkeit zum einen durch mehrere Schichten und gleichzeitig durch den Einsatz des Fluidpolsters weiter reduziert werden kann. Um noch größere Winkel bei geringerer Rückstellkraft zu ermöglichen, können mehrere Gelenke hintereinander geschaltet werden. Dazu ist es sinnvoll, die Elemente in Richtung des Seils, welche vom Fundament bzw. von der Plattform weiter entfernt sind, weicher auszuführen als die Elemente der Einspannstelle. Bei entsprechend weichen Anbindungsstellen kann auf die Seiltechnik gänzlich verzichtet werden. Die Seile können durch eine Aneinanderreihung mehrerer Gelenke mit dazwischen geschalteten starren Elementen ersetzt werden.

Die Elastomerschichten in den erfindungsgemäßen Kugel-Pendellagern können unterschiedliche Dicke aufweisen, die jedoch vorwiegend zwischen 5 mm und 20 mm variiert. Bei Verwendung von zwei Schichten weist die Innenschicht vorteilhafterweise nur etwa 50 - 70% der Dicke der Außenschicht auf, die an die Gelenkpfanne vulkanisiert ist. Eine elastische Innenschicht ist zwischen 4.5 und 9 mm dick während eine elastische Außenschicht zwischen 6 und 12 mm dick sein kann. Die Shore-Härten der Elastomeren, die in den erfindungsgemäßen Kugel-Pendellagern zum Einsatz kommen belaufen sich zwischen 50 und 100 Shore A.

## Patentansprüche

1. Windkraftanlage umfassend einen Pendel-Schwingungstilger mit hoher axialer Festigkeit, der befähigt ist, große Kräfte aufzunehmen, auf kleinem Raum große Winkel zu durchlaufen und sich in alle Richtungen frei zu bewegen_ohne wesentliche Beeinflussung der Eigenfrequenz der Anlage, wobei der Schwingungstilger eine Pendelstange (2), eine Tilgermasse (1) und mindestens ein Kugelpendellager umfasst, welches am oberen Ende der Pendelstange (2) angebracht ist und ein elastisches Kugelgelenk (5) mit einem inneren Gelenkkopf (5.4) und einer Gelenkpfanne (5.5) aufweist, wobei der Gelenkkopf in der entsprechenden dimensionierten und geformten Gelenkpfanne lagert, wobei Gelenkkopf (5.4) und Gelenkpfanne (5.5) des elastischen Kugelgelenks (5) sphärisch sind und die gesamten sphärischen Flächen des Gelenkkopfes (5.4) und der Gelenkpfanne (5.5) von mindestens einer Elastomerschicht (5.1) bedeckt und durch diese miteinander fest verbunden sind, wobei die mindestens eine Elastomerschicht eine Dicke von 5 - 20 mm besitzt, und die von der Elastomerschicht bedeckten gesamten sphärischen Flächen des Gelenkkopfes (5.4) und der Gelenkpfanne (5.5) eine Teilkugelform mit einem Umschlingungswinkel von 180° bis 325°aufweisen.

2. Windkraftanlage nach Anspruch 1, **dadurch gekennzeichnet, dass** das Kugelpendellager mindesten zwei Elastomerschichten (5.1, 5.2) aufweist, welche ganz oder teilweise durch ein oder mehrere Zwischenbleche (5.3) voneinander getrennt sind.

3. Windkraftanlage nach Anspruch 1 oder 2, **dadurch gekennzeichnet, dass** das Lager Bereiche zwischen Elastomerschicht (5.1) und Gelenkkopf (5.4) und / oder Gelenkpfanne (5.5) oder innerhalb der Elastomerschicht (5.1) aufweist, welche es erlauben, dass ein Fluid (5.6) über ein Füllventil in diese Bereiche eingepresst werden kann, so dass dadurch lokal unterschiedliche Torsionssteifigkeiten bei gleichbleibenden axialen Steifigkeiten vorliegen.

4. Windkraftanlage nach einem der Ansprüche 1 - 3, **dadurch gekennzeichnet, dass** die Elastomerschicht (5.1) zwischen Gelenkkopf und Gellenkpfanne in axialer Richtung des Lagers eine unterschiedliche Steifigkeit besitzt wie in horizontaler Richtung.

5. Windkraftanlage nach einem der Ansprüche 1 - 4, **dadurch gekennzeichnet, dass** der Schwingungstilger eine Vorrichtung im Bereich des Kugelpendellagers aufweist, welche Torsionsschwingungen des Tilgers vermindert oder verhindert.

6. Windkraftanlage nach Anspruch 5, **dadurch gekennzeichnet, dass** die Vorrichtung mindestens einen Torsionshebel (2.1) umfasst, welcher im Wesentlichen senkrecht zur Pendelstange (2) oder zum Pendelseil (14) angebracht ist und ein elastisches Torsionslager für Nickbewegungen (6) und ein elastisches Torsionslager für Drehbewegungen (7) des Pendels (1, 2) aufweist.

7. Windkraftanlage nach Anspruch 5, **dadurch gekennzeichnet, dass** die Vorrichtung ein Pendeljoch (2.2) (2.3) mit elastischen Anschlagelementen (10) im Bereich des Pendelgelenks (5) oder des Pendelseils (14) aufweist und so angeordnet ist, dass torsionale Pendelbewegungen gedämpft oder vermieden werden.

8. Windkraftanlage nach Anspruch 5 oder 7 **dadurch gekennzeichnet, dass** die Vorrichtung mindestens drei Federelemente (8) aufweist, welche im Bereich des Pendelgelenks (5) im Wesentlichen gleichmäßig um die Pendelstange (2) oder das Pendelseil (14) herum verteilt und so angeordnet sind, dass torsionale Bewegungen des Pendels gedämpft oder vermieden werden.

9. Windkraftanlage nach Anspruch 5 oder 7 **dadurch gekennzeichnet, dass** die Vorrichtung mindestens drei Lenker (9) mit elastischen sphärischen Lagern (9.1)(9.2) aufweist, welche im Bereich des Pendelgelenks (5) im Wesentlichen gleichmäßig um die Pendelstange (2) oder das Pendelseil (14) herum verteilt und so angeordnet sind, dass torsionale Bewegungen des Pendels gedämpft oder vermieden werden.

10. Windkraftanlage nach einem der Ansprüche 1 - 9, **dadurch gekennzeichnet, dass** sie mindestens eine zusätzliche Vorrichtung zur Dämpfung von in der Anlage auftretenden Schwingungen aufweist, wobei diese Vorrichtung ein hydraulischer Dämpfer, ein Wirbelstromdämpfer oder ein mechanischer temperaturunabhängiger Dämpfer ist.

11. Windkraftanlage nach einem der Ansprüche 1 - 10, **dadurch gekennzeichnet, dass** die Windkraftanlage eine Off-Shore Plattform (18) ist, welche über Seile (15) mit dem Meeres- oder Seegrund (12) über Fundamente (11) verankert ist, wobei jedes Seil (15) mittels Seilbefestigungen (14) über ein besagtes Kugelgelenk (5) als oberes Kugelgelenk (17) an der Plattform und ein besagtes Kugelgelenk (5) als unteres Kugelgelenk (16) am Fundament befestigt ist.

12. Windkraftanlage umfassend mindestens ein elastisches Kugelpendellager, welches ein Kugelgelenk (5) mit einem inneren Gelenkkopf (5.4) und einer Gelenkpfanne (5.5) umfasst, wobei der Gelenkkopf mindestens Halbkugelform aufweist und in der entsprechenden dimensionierten und geformten Gelenkpfanne gelagert ist, **dadurch gekennzeichnet, dass** zwischen Gelenkkopf und Gelenkpfanne mindestens zwei Elastomerschichten (5.1, 5.2), welche ganz oder teilweise durch ein oder mehrere Zwischenbleche (5.3) voneinander getrennt in der Weise angeordnet sind, dass mindestens 80% der Fläche einer Elastomerschicht mit den sphärischen Flächen des Gelenkkopfes und der Gelenkpfanne festverbunden ist, eine Elastomerschicht eine Dicke von 5 mm - 20 mm aufweist, und der von einer Elastomerschicht bedeckte Gelenkkopf (5.4) und die entsprechende Gelenkpfanne (5.5) eine Teilkugelform mit einem Umschlingungswinkel von 180° bis 325°aufweisen.

13. Windkraftanlage nach Anspruch 12, **dadurch gekennzeichnet, dass** die Windkraftanlage eine Off-Shore Plattform (18) ist, welche über Seile (15) mit dem Meeres- oder Seegrund (12) über Fundamente (11) verankert ist, wobei jedes Seil (15) mittels Seilbefestigungen (14) über ein besagtes Kugelgelenk (5) als oberes Kugelgelenk (17) an der Plattform und ein besagtes Kugelgelenk (5) als unteres Kugelgelenk (16) am Fundament befestigt ist..

## Claims

1. Wind turbine comprising a pendulum vibration absorber with high axial strength which is capable of absorbing large forces, passing through large angles in a small space and moving freely in all directions without significantly influencing the natural frequency of the plant, where the vibration absorber comprises a pendulum rod (2), an absorber weight (1) and at least one pendulum ball bearing, which is attached to the upper end of the pendulum rod (2) and has an elastic ball joint (5) with an inner joint head (5.4) and a joint socket (5.5), where the joint head is mounted in the correspondingly dimensioned and shaped joint socket,
where the joint head (5.4) and joint socket (5.5) of the elastic ball joint (5) are spherical and the entire spherical surfaces of the joint head (5.4) and of the joint socket (5.5) are covered by at least one elastomer layer (5.1) and are firmly connected to one another by the latter, where the at least one elastomer layer has a thickness of 5 - 20 mm, and the entire spherical surfaces of the joint head (5.4) and joint socket (5.5) covered by the elastomer layer have a partly spherical shape with a wrap angle of 180° to 325°.

2. Wind turbine according to Claim 1, **characterised in that** the pendulum ball bearing has at least two elastomer layers (5.1, 5.2), which are fully or partly separated from one another by one or more intermediate metal sheets (5.3).

3. Wind turbine according to Claim 1 or 2, **characterised in that** the bearing has regions between elastomer layer (5.1) and joint head (5.4) and/or joint socket (5.5) or within the elastomer layer (5.1) which allow a fluid (5.6) to be forced into these regions via a filling valve, so that locally different torsional stiffnesses are consequently present with constant axial stiffnesses.

4. Wind turbine according to one of Claims 1 - 3, **characterised in that** the elastomer layer (5.1) between joint head and joint socket has a different stiffness in the axial direction of the bearing than in the horizontal direction.

5. Wind turbine according to one of Claims 1 - 4, **characterised in that** the vibration absorber has a device in the region of the pendulum ball bearing which reduces or prevents torsional vibrations of the absorber.

6. Wind turbine according to Claim 5, **characterised in that** the device comprises at least one torsion lever (2.1) which is mounted essentially perpendicular to the pendulum rod (2) or pendulum cable (14) and has an elastic torsion bearing for pitch movements (6) and an elastic torsion bearing for rotational movements (7) of the pendulum (1, 2).

7. Wind turbine according to Claim 5, **characterised in that** the device has a pendulum yoke (2.2) (2.3) with elastic stop elements (10) in the region of the pendulum joint (5) or pendulum cable (14) and is arranged in such a way that torsional pendulum movements are damped or prevented.

8. Wind turbine according to Claim 5 or 7, **characterised in that** the device has at least three spring elements (8) which are distributed essentially uniformly around the pendulum rod (2) or pendulum cable (14) in the region of the pendulum joint (5) and are arranged in such a way that torsional movements of the pendulum are damped or prevented.

9. Wind turbine according to Claim 5 or 7, **characterised in that** the device has at least three connecting rods (9) with elastic spherical bearings (9.1)(9.2) which are distributed essentially uniformly around the pendulum rod (2) or pendulum cable (14) in the region of the pendulum joint (5) and are arranged in such a way that torsional movements of the pendulum are damped or prevented.

10. Wind turbine according to one of Claims 1 - 9, **characterised in that** it has at least one additional device for damping vibrations occurring in the plant, where this device is a hydraulic damper, an eddy current damper or a mechanical temperature-independent damper.

11. Wind turbine according to one of Claims 1 - 10, **characterised in that** the wind turbine is an offshore platform (18) which is anchored via cables (15) to the ocean or sea bed (12) via foundations (11), where each cable (15) is attached by means of cable fastenings (14) to the platform via a said ball joint (5) as upper ball joint (17) and to the foundation via a said ball joint (5) as lower ball joint (16).

12. Wind turbine comprising at least one elastic pendulum ball bearing which comprises a ball joint (5) having an inner joint head (5.4) and a joint socket (5.5), where the joint head has an at least hemispherical shape and is mounted in the correspondingly dimensioned and shaped joint socket, **characterised in that** at least two elastomer layers (5.1, 5.2), which are fully or partly separated from one another by one or more intermediate metal sheets (5.3), are arranged between joint head and joint socket in such a way that at least 80% of the area of an elastomer layer is firmly connected to the spherical surfaces of the joint head and joint socket, an elastomer layer has a thickness of 5 mm - 20 mm, and the joint head (5.4) covered by an elastomer layer and the corresponding joint socket (5.5) have a partly spherical shape with a wrap angle of 180° to 325°.

13. Wind turbine according to Claim 12, **characterised in that** the wind turbine is an offshore platform (18) which is anchored via cables (15) to the ocean or sea bed (12) via foundations (11), where each cable (15) is attached by means of cable fastenings (14) to the platform via a said ball joint (5) as upper ball joint (17) and to the foundation via a said ball joint (5) as lower ball joint (16).

## Revendications

1. Eolienne comprenant un absorbeur de vibrations à balancier qui présente une résistance axiale élevée, lequel dispose de la capacité d'absorber des forces importantes, en décrivant des angles importants dans un petit espace et par déplacement libre dans toutes les directions sans que la fréquence naturelle de l'installation ne soit influencée de façon significative, dans laquelle l'absorbeur de vibrations comprend une tige de balancier (2), un poids d'absorbeur (1) et au moins un roulement à billes de balancier, lequel est fixé à l'extrémité supérieure de la tige de balancier (2) et comporte une articulation sphérique élastique (5) qui est munie d'une tête d'articulation interne (5.4) et d'un manchon d'articulation (5.5), dans laquelle la tête d'articulation est montée dans le manchon d'articulation dimensionné et conformé en correspondance,
dans laquelle la tête d'articulation (5.4) et le manchon d'articulation (5.5) de l'articulation sphérique élastique (5) sont sphériques et les surfaces sphériques de la tête d'articulation (5.4) et du manchon d'articulation (5.5) sont en totalité recouvertes par au moins une couche en élastomère (5.1) et sont connectées fermement l'une à l'autre par cette dernière, dans laquelle l'au moins une couche en élastomère présente une épaisseur de 5 - 20 mm, et les surfaces sphériques de la tête d'articulation (5.4) et du manchon d'articulation (5.5) qui sont en totalité recouvertes par la couche en élastomère présentent une forme partiellement sphérique selon un angle d'enroulement de 180° à 325°.

2. Eolienne selon la revendication 1, **caractérisée en ce que** le roulement à billes de balancier comporte au moins deux couches en élastomère (5.1, 5.2), lesquelles sont complètement ou partiellement séparées l'une de l'autre ou les unes des autres par une ou plusieurs feuille(s) métallique(s) intermédiaire(s) (5.3).

3. Eolienne selon la revendication 1 ou 2, **caractérisée en ce que** le roulement comporte des régions entre la couche en élastomère (5.1) et la tête d'articulation (5.4) et/ou le manchon d'articulation (5.5) ou à l'intérieur de la couche en élastomère (5.1) qui permettent de forcer un fluide (5.6) à l'intérieur de ces régions via une vanne de remplissage, de telle sorte que des résistances de torsion localement différentes soient par conséquent présentes selon des résistances axiales constantes.

4. Eolienne selon l'une des revendications 1 - 3, **caractérisée en ce que** la couche en élastomère (5.1) entre la tête d'articulation et le manchon d'articulation présente une résistance différente dans la direction axiale du roulement par comparaison avec dans la direction horizontale.

5. Eolienne selon l'une des revendications 1 - 4, **caractérisée en ce que** l'absorbeur de vibrations comporte un dispositif dans la région du roulement à billes de balancier, lequel réduit ou empêche des vibrations en torsion de l'absorbeur.

6. Eolienne selon la revendication 5, **caractérisée en ce que** le dispositif comprend au moins un levier de torsion (2.1) qui est monté essentiellement perpendiculairement à la tige de balancier (2) ou au câble de balancier (14) et qui comporte un palier de torsion élastique pour des mouvements de tangage (6) et un palier de torsion élastique pour des mouvements de rotation (7) du balancier (1, 2).

7. Eolienne selon la revendication 5, **caractérisée en ce que** le dispositif comporte une fourche de balancier (2.2) (2.3) qui est munie d'éléments d'arrêt élastiques (10) dans la région de l'articulation de balancier (5) ou de câble de balancier (14) et qui est agencée de telle sorte que des mouvements de balancier en torsion soient amortis ou empêchés.

8. Eolienne selon la revendication 5 ou 7, **caractérisée en ce que** le dispositif comporte au moins trois éléments de ressort (8) qui sont distribués essentiellement de façon uniforme autour de la tige de balancier (2) ou du câble de balancier (14) dans la région de l'articulation de balancier (5) et qui sont agencés de telle sorte que des mouvements en torsion du balancier soient amortis ou empêchés.

9. Eolienne selon la revendication 5 ou 7, **caractérisée en ce que** le dispositif comporte au moins trois tiges de connexion (9) qui sont munies de paliers sphériques élastiques (9.1)(9.2) qui sont distribués essentiellement de façon uniforme autour de la tige de balancier (2) ou du câble de balancier (14) dans la région de l'articulation de balancier (5) et qui sont agencés de telle sorte que des mouvements en torsion du balancier soient amortis ou empêchés.

10. Eolienne selon l'une des revendications 1 - 9, **caractérisée en ce qu'**elle comporte au moins un dispositif additionnel pour amortir les vibrations qui sont observées dans l'installation, dans laquelle ce dispositif est un amortisseur hydraulique, un amortisseur à courants de Foucault ou un amortisseur mécanique indépendant de la température.

11. Eolienne selon l'une des revendications 1 - 10, **caractérisée en ce que** l'éolienne est une plateforme offshore (18) qui est ancrée via des câbles (15) sur le lit de l'océan ou de la mer (12) via des fondations (11), dans laquelle chaque câble (15) est fixé au moyen de moyens de fixation de câble (14) sur la plateforme via une dite articulation sphérique (5) en tant qu'articulation sphérique supérieure (17) et sur la fondation via une dite articulation sphérique (5) en tant qu'articulation sphérique inférieure (16).

12. Eolienne comprenant au moins un roulement à billes de balancier élastique qui comprend une articulation sphérique (5) qui comporte une tête d'articulation interne (5.4) et un manchon d'articulation (5.5), dans laquelle la tête d'articulation présente une forme au moins hémisphérique et est montée dans le manchon d'articulation dimensionné et conformé en correspondance, **caractérisée en ce qu'**au moins deux couches en élastomère (5.1, 5.2), lesquelles sont complètement ou partiellement séparées l'une de l'autre ou les unes des autres par une ou plusieurs feuille(s) métallique(s) intermédiaire(s) (5.3), sont agencées entre la tête d'articulation et le manchon d'articulation de telle sorte qu'une quantité d'au moins 80 % de l'aire d'une couche en élastomère soit connectée fermement aux surfaces sphériques de la tête d'articulation et du manchon d'articulation, une couche en élastomère présente une épaisseur de 5 mm - 20 mm, et la tête d'articulation (5.4) qui est recouverte par une couche en élastomère et le manchon d'articulation correspondant (5.5) présentent une forme partiellement sphérique selon un angle d'enroulement de 180° à 325°.

13. Eolienne selon la revendication 12, **caractérisée en ce que** l'éolienne est une plateforme offshore (18) qui est ancrée via des câbles (15) sur le lit de l'océan ou de la mer (12) via des fondations (11), dans laquelle chaque câble (15) est fixé au moyen de moyens de fixation de câble (14) sur la plateforme via une dite articulation sphérique (5) en tant qu'articulation sphérique supérieure (17) et sur la fondation via une dite articulation sphérique (5) en tant qu'articulation sphérique inférieure (16).
